# EUROPÄISCHE PATENTSCHRIFT

(11) **EP 2 930 492 B1**
(45) Veröffentlichungstag und Bekanntmachung des Hinweises auf die Patenterteilung: **23.09.2020**
(21) Anmeldenummer: 14194585.7
(22) Anmeldetag: 24.11.2014
(51) Int. Cl.: G01N 1/22

(54) **Wasserdampfmesseinrichtung**
Water vapour measuring device
Dispositif de mesure de vapeur d'eau

(30) Priorität: 11.04.2014 EP 14164515
(43) Veröffentlichungstag der Anmeldung: 14.10.2015
(73) Patentinhaber: Bundesrepublik Deutschland, vertreten durch das BMVI, dieses vertreten durch den Deutschen Wetterdienst, 63067 Offenbach (DE)
(72) Erfinder: Hoff, Axel, 30659 Hannover (DE)
(74) Vertreter: Eisenführ Speiser

(56) Entgegenhaltungen:
- EP-A1- 0 523 396
- EP-A1- 1 457 765
- DE-A1- 4 100 363
- US-B1- 6 857 328
- HERMANN M ET AL: "Sampling characteristics of an aircraft-borne aerosol inlet system", JOURNAL OF ATMOSPHERIC AND OCEANIC TECHNOLOGY, Bd. 18, Januar 2001 (2001-01), Seiten 7-19, XP008114321, ISSN: 0739-0572
- C. A. M. Brenninkmeijer ET AL: "CARIBIC-Civil Aircraft for Global Measurement of Trace Gases and Aerosols in the Tropopause Region", JOURNAL OF ATMOSPHERIC AND OCEANIC TECHNOLOGY, Bd. 16 Oktober 1999 (1999-10), Seiten 1373-1383, XP055177635, Gefunden im Internet: URL:http://journals.ametsoc.org/
- C. A.M. BRENNINKMEIJER ET AL: "Civil Aircraft for the regular investigation of the atmosphere based on an instrumented container: The new CARAIBIC system", ATMOSPHERIC CHEMISTRY AND PHYSICS, vol. 7, no. 18, 27 September 2007 (2007-09-27), pages 4953-4976, XP055005311,

## Beschreibung

Die Erfindung betrifft eine Wasserdampfmesseinrichtung mit einer Ein- und Auslaufvorrichtung für Luft zur Messluftversorgung eines Systems zum Bestimmen des Wasserdampfgehaltes oder anderer gasförmiger Beimengungen der Umgebungsluft eines fliegenden Flugzeuges.

In der folgenden Beschreibung dieser Erfindung wird vornehmlich auf das Gas "Wasserdampf' Bezug genommen. Die Ein- und Auslaufvorrichtung kann beispielsweise für die Anwendung bei Feuchtemessungen eingesetzt werden. Wasserdampfmesseinrichtungen für Flugzeuge sind grundsätzlich bekannt und besitzen typischerweise eine Ein- und Auslaufvorrichtung (Messsonde), die dazu dient, Luft aus der Umgebung eines Luftfahrzeugs aufzunehmen und wieder an diese abzugeben. Die von der Ein- und Auslaufvorrichtung aufgenommene Luft wird über eine Zuleitung dem eigentlichen Messsystem zugeführt, in dem dann die Bestimmung des Wasserdampfgehaltes der Luft erfolgt. Das Messsystem, auf das hier Bezug genommen wird, weist eine Messkammer auf und ist innerhalb des Luftfahrzeugs untergebracht. Im Betrieb des Luftfahrzeuges strömt permanent Luft durch die Ein- und Auslaufvorrichtung und über die Zuleitung in und durch das Messsystem mit der Messkammer und anschließend über die Ableitung wieder zurück zu der Ein- und Auslaufvorrichtung und wird dort wieder an die Umgebung des Luftfahrzeuges abgegeben. Die durch das Messsystem strömende Luft wird auch als Messluft bezeichnet.

Aus C.A.M. Brenninkmeijer et al.: "CARIBIC-Civil Aircraft for Global Measurement of Trace Gases and Aerosols in the Tropopause Region", Journal of Atmospheric and Oceanic Technology, Bd. 16 Oktober 1999 (1999-10), Seiten 1373-1383, XP055177635 ist eine Messeinrichtung mit einem Messsystem für die Konzentration von Ozon, Kohlenstoffmonoxid, Aerosole und anderer Gase bekannt. Die Messeinrichtung hat ein Einlaufsystem. Das Einlaufsystem hat einen beheizten Einlaufkegel in dem sich Enden von zwei Einlaufleitungen befinden, die ins Innere eines Flugzeugs führen. Ein Schaft des Einlaufsystems hat eine Länge von 25 cm, so dass sich die Enden der Einlaufleitungen außerhalb der Grenzschicht des Flugzeugs befinden. Das Einlaufsystem führt Luft in einen mit Messinstrumenten gefüllten Container im Inneren des Flugzeugs, um diese zu analysieren.

Ziel der Erfindung ist es eine verbesserte Wasserdampfmessseinrichtung mit einer Ein- und Auslaufvorrichtung für Luft zur Messluftversorgung der Wasserdampfmessseinrichtung bereitzustellen.

Erfindungsgemäß wird dieses Ziel von einer Wasserdampfmesseinrichtung mit einer flugzeugmontierbaren Ein- und Auslaufvorrichtung, sowie einer Zuleitung, einem Messsystem mit einer Messkammer und einer Ableitung erreicht. Die flugzeugmontierbare Ein- und Auslaufvorrichtung weist ein Kopfteil mit einem Lufteinlauf, einen Schaft mit einem Luftauslass, sowie einen Befestigungsabschnitt für die Befestigung der Ein- und Auslaufvorrichtung an einem Flugzeug auf. Der Lufteinlauf hat einen solchen Abstand von dem Befestigungsabschnitt, dass der Lufteinlauf sich außerhalb einer Reibungsschicht (Grenzschicht) um eine Oberfläche eines Flugzeuges befindet, wenn die Ein- und Auslaufvorrichtung an einem fliegenden Flugzeug montiert ist. Die Ein- und Auslaufvorrichtung weist einen lösbaren Einsatz auf, der zum Einsetzen in den Schaft der Ein- und Auslaufvorrichtung ausgebildet ist. Der Einsatz weist eine Eintrittsöffnung und einen ersten Zuleitungsabschnitt in Form einer Stauhülse auf, an den sich in gerader Linie ein zweiter Zuleitungsabschnitt als Einlaufleitung des Einsatzes anschließt, die gegenüber der als erstem Zuleitungsabschnitt dienenden Stauhülse einen verringerten Durchmesser aufweist. Der Einsatz ist so bemessen, dass die Eintrittsöffnung der Stauhülse sich nahe einer Öffnung zwischen dem Kopfteil und dem Schaft der Ein- und Auslaufvorrichtung befindet, wobei die Stauhülse über die Einlaufleitung mit einem Zuleitungsanschluss für die Zuleitung verbunden ist. Der Einsatz weist ein die Einlaufleitung umgebendes Auslaufmantelrohr auf, das mit einem Ableitungsanschluss für die Ableitung verbunden ist. Der Einsatz weist Mittel zum lösbaren Verbinden des Einsatzes mit dem Schaft der Ein- und Auslaufvorrichtung auf. Der Lufteinlauf ist über die Stauhülse und die Einlaufleitung mit dem Zuleitungsanschluss für die Zuleitung verbunden, um in den Lufteinlauf eintretende Luft zu der Messkammer eines Messsystems zu führen, das sich im Betrieb im Inneren eines Flugzeuges befindet. Weiterhin ist der Luftauslass über das Auslaufmantelrohr mit dem Ableitungsanschluss für die Ableitung verbunden, um aus der Messkammer austretende Luft zum Luftauslass der Ein- und Auslaufvorrichtung zu führen. Die Zuleitung ist mit dem Zuleitungsanschluss der Ein- und Auslaufvorrichtung und einem Eingang der Messkammer dicht verbunden. Die Ableitung ist mit einem Ausgang der Messkammer und dem Ableitungsanschluss der Ein- und Auslaufvorrichtung verbunden. Das Messsystem ist ausgebildet, den Wasserdampfgehalt von Luft in der Messkammer zu bestimmen. Die Wasserdampfmesseinrichtung weist sowohl eine an einer Stirnfläche der Ein- und Auslaufvorrichtung und/oder am Übergang oder nahe dem Übergang zwischen Lufteinlauf und Stauhülse angeordnete Sondenheizung als auch eine an der Zuleitung zur Messkammer angeordnete Heizung auf.

Die Erfinder haben erkannt, dass es vorteilhaft ist, den Messlufteinlauf entgegen der Anströmung auszurichten. Hierdurch kann die Gefahr verringert werden, dass es zu einer Kondensatbildung kommt, die eine Wasserdampfmessung, also die Bestimmung des Wasserdampfgehaltes der Messluft, beeinträchtigen würde. Dies folgt daraus, dass die Temperatur der Messluft erhöht ist und damit auch die Taupunktdifferenz der Messluft. Eine Beheizung der Messkammer kann damit entfallen. Weiterhin wird durch einem Abstand der Eintrittsöffnung zur Flugzeugoberfläche der Kontakt mit an der Flugzeugaußenhaut angelagerten Partikeln verringert. Des Weiteren kann eine Vermischung der in das Messsystem eintretenden Messluft mit gegebenenfalls aus der Druckkabine austretender Luft verhindert werden. Weiterhin baut sich während des Flugbetriebs eines Flugzeuges eine Druckdifferenz zwischen Lufteinlauf und Luftauslass auf, die den Durchfluss von Messluft bewirkt. Des Weiteren erhöht die Ein- und Auslaufvorrichtung die Dichte des zu messenden Wasserdampfes, wodurch eine Erniedrigung der unteren Ansprechschwelle des Messsystems erfolgt. Die Ein- und Auslaufvorrichtung verhindert, dass sich unterkühlte Wasserpartikel an dem der Flugzeugströmung ausgesetzten Stirnfläche der Eintrittsöffnung der Ein- und Auslaufvorrichtung anlagern und so die Flugsicherheit gefährden. Inhomogenitäten in der Messgasdichte können vermieden werden, weil die Messkammer im Messsystem gegebenenfalls nicht mehr wegen einer sonst möglichen Kondensationsgefahr beheizt werden muss.

Die Ein- und Auslaufvorrichtung soll vorzugsweise innerhalb von 3 m bis 5 m hinter der Rumpfnase des Luftfahrzeugs, also mit der Eintrittsöffnung außerhalb der turbulenten Reibungsschicht (Grenzschicht) angeordnet sein, die sich um das Luftfahrzeug befindet. Die Reibungsschicht um das Luftfahrzeug ist die fluiddynamische Grenzschicht der das Flugzeug umströmenden Luft, in Folge der Reibung an einer Flugzeugoberfläche eine geringere Geschwindigkeit aufweist, als weiter entfernte Luft. Innerhalb der Reibungsschicht findet ein Impuls-, Wärme- und Molekular- beziehungsweise Partikelaustausch mit der Wandfläche des Luftfahrzeuges statt. Da die Eintrittsöffnung und damit der Lufteinlauf der Ein- und Auslaufvorrichtung außerhalb der Reibungsschicht angeordnet ist, unterliegt die in die Ein- und Auslaufvorrichtung eintretende Messluft keiner Beeinflussung durch Eigenschaften der Wandfläche, wie beispielsweise einer Wasserbenetzung oder eines Druckkabinenlecks stromaufwärts.

In Folge des erfindungsgemäß vorgesehenen Abstands des Lufteinlaufs von der Außenoberfläche des Luftfahrzeugs trifft die Luft im Betrieb des Luftfahrzeugs in etwa mit der Relativgeschwindigkeit auf den Lufteinlauf, die der Geschwindigkeit des Luftfahrzeugs relativ zur Luft, also der Air-Speed, entspricht. Im Betrieb wird die auf den Lufteinlauf treffende Umgebungsluft relativ zum Luftfahrzeug abgebremst und dadurch verdichtet, sodass sie sich bedingt durch den Staueffekt adiabatisch erwärmt. Die Erwärmung hängt dabei von dem am Lufteinlauf herrschenden Auftreffdruck ab, der wiederum geschwindigkeitsabhängig ist. Im Ergebnis ist die Messluft wärmer als die Umgebungsluft, sodass die Gefahr von Kondensatbildung verringert ist. Dadurch kann auf eine weitere Erwärmung der Messluft weitgehend und insbesondere in der Messkammer verzichtet werden.

Die Ein- und Auslaufvorrichtung wird im Folgenden auch als
Ram Air Intake for Water Vapour Measurement (RAIWaM)
bezeichnet. Der Einfachheit halber wird im Folgenden das Akronym RAIWaM verwendet.

Der äußere Ummantelungsteil von RAIWaM kann ein für Luftfahrzeuge gewöhnliches Gesamttemperaturmessgehäuse sein, das im Folgenden auch als TAT-Gehäuse bezeichnet wird (TAT = Total Air Temperature), wie es bisher für Lufttemperaturmessungen verwendet wird. Konventionelle Gehäuse dieser Art für die Lufttemperaturmessung besitzen jedoch keine Zuleitung und Ableitung und mithin auch keine Zuleitungs- und Ableitungsanschlüsse zum Anschluss an ein Messsystem für die Bestimmung des Wasserdampfgehaltes der Luft. Das aerodynamische und thermodynamische Funktionsprinzip der TAT-Gehäuse ist in Stickney et al. (1994) dargelegt; c.f. STICKNEY, T. M.; SHEDLOV, M. W., THOMPSON, D. I., 1994: Goodrich Total Temperature Sensors. Goodrich Corporation, Burnsville, Maine, USA. Eine mögliche Gehäusevariante ist die des Typs Rosemount© 102 BX (oder-BW), die ein entnehmbares Temperaturmesselement enthält.

Die staubedingte adiabatische Erwärmung der Messluft beträgt bei Mach 0,85 und in einer Höhe von 200 hPa ca. 30 K. Selbst bei kleineren Geschwindigkeiten und in geringeren Höhen sorgt die adiabatische Erwärmung dafür, dass die Lufttemperatur zu dem möglichen Taupunkt immer einen ausreichenden Abstand behält. Die einzige Ausnahme ist beim Durchfliegen von Wolken gegeben, was bei dem nachträglichen Umrechnen des Wasserdampfmischungsverhältnisses in die relative Feuchte zu einem Wert von über 100 % führen kann. Letztlich kann dieser Wert immer als Hinweis auf das Vorhandensein von flüssigen oder festen Wasserpartikeln, sprich Wolken oder Niederschlag, verwendet werden.

In einer möglichen Ausgestaltung der flugzeugmontierbaren Ein- und Auslaufvorrichtung beträgt der Abstand zwischen Befestigungsabschnitt und Lufteinlauf zwischen 50 mm und 150 mm, insbesondere zwischen 80 mm und 100 mm. Die flugzeugmontierbare Ein- und Auslaufvorrichtung kann beispielsweise einen Abstand zwischen Befestigungsabschnitt und Lufteinlauf von 87 mm haben.

In einer bevorzugten Ausgestaltung der flugzeugmontierbaren Ein- und Auslaufvorrichtung weist die Ein- und Auslaufvorrichtung ein Kopfteil, einen Schaft und einen Flansch auf. Der Schaft erstreckt sich zwischen Flansch und Kopfteil und umschließt die Einlaufleitung. Das Kopfteil weist an einer Stirnseite den Lufteinlauf auf. Der Flansch bildet den Befestigungsabschnitt zum Befestigen der Ein- und Auslaufvorrichtung an einem Flugzeug. Weiterhin kann das Kopfteil einen beidseitig offenen Strömungskanal einschließen, dessen vorderes, offenes Ende der Lufteinlauf ist und der im Betrieb von Luft durchströmt wird und so angeordnet ist, dass er im Betrieb annähernd parallel zur anliegenden Strömung verläuft. Des Weiteren kann sich der Strömungskanal stromabwärts des Lufteinlaufes zunächst im Innenquerschnitt erweitern und anschließend zu seinem offenen hinteren, einen Luftauslauf bildenden Ende wieder verjüngen. Die Zuleitung kann von einem im Innenquerschnitt erweiterten Abschnitt des Strömungskanals abgehen. Zudem kann das hintere offene Ende des Strömungskanals einen kleineren Querschnitt haben, als der Lufteinlauf. Der kleinere Querschnitt am hinteren offenen Ende des Strömungskanals erzeugt eine Strömungsengstelle, die im Flugzustand des Luftfahrzeuges die am Eintritt in die relativ geschwindigkeitsreduzierte Strecke entstehende Druckerhöhung und somit die adiabatische Erwärmung der Messluft erzeugt. Die Summe aus Auftreffdruck und statischem Druck, also der Gesamtdruck und damit auch der adiabatische Erwärmungseffekt bleiben entlang des Strömungskanals bzw. in der kompletten Messstrecke bis zu der Strömungsengstelle erhalten.

Die flugzeugmontierbare Ein- und Auslaufvorrichtung weist vorzugsweise eine beheizte Eintrittsöffnung auf. Die hierzu vorzugsweise vorgesehene Sondenheizung dient zur Vermeidung von Eisbildung und ist vorzugsweise an der Stirnfläche der Ein- und Auslaufvorrichtung angeordnet.

Die flugzeugmontierbare Ein- und Auslaufvorrichtung weist eine an der Zuleitung zur Messkammer angeordnete Heizung auf. Die an der Zuleitung angeordnete Heizung dient zur Erwärmung der Messluft, bevor sie in den eigentlichen Messprozess der Messkammer eintritt und macht somit einer Erwärmung der Messluft in der Messkammer überflüssig. Es ist möglich, dass die durch den Staueffekt bedingte adiabatische Erwärmung der Messluft als noch nicht ausreichend angesehen wird, eine Kondensatbildung sicher zu vermeiden. In diesem Fall kann die Heizung zur Erwärmung der Einlaufleitung zwischen RAIWaM und dem Messsystem dienen, um so die Messluft zu erwärmen. Entsprechend kann es gemäß einer bevorzugten Ausführungsvariante vorgesehen sein, dass die Zuleitung zur Messkammer eine Heizung zum Erwärmen von durch die Zuleitung strömende Luft aufweist. Indem die Heizung im Bereich der Zuleitung angeordnet ist, ist es möglich die Messluft vor dem Eintreten in die Messkammer ausreichend zu erwärmen, sodass die Messluft innerhalb der Messkammer nicht beheizt werden muss und deswegen eine homogene Temperatur aufweist.

Die Messkammer des Messsystems ist vorzugsweise eine Absorptionsmesskammer, die eine Bestimmung des Wasserdampfgehalts zum Beispiel mittels Absorptionsspektrometrie erlaubt.

In einem beispielhaften Anwendungsfall des RAIWaM für das Messsystem Typ WVSS-II von SpectraSensors Inc., USA hat dieses eine Messkammer für die Bestimmung des Wasserdampfgehalts mittels Absorptionsspektrometrie. Die Absorptionsspektrometrie ist ein Verfahren zum Bestimmen des Wasserdampfgehaltes der Luft. Eine Messluftsäule wird von einem Messlichtstrahl durchleuchtet dessen Absorption bei einer bestimmten Wellenlänge das Maß der Wasserdampfdichte wiedergibt. Für die Berechnung eines physikalisch konservativen Luftfeuchteparameters, wie z.B. dem Wasserdampfmassenmischungsverhältnis ist neben der Wasserdampfdichte auch die Messung des Druckes und der Temperatur des Kammerinhaltes erforderlich. Letztere Größe kann nur an einer endlichen Zahl von Messpunkten innerhalb der Kammer erfolgen. Aus diesem Grund ist ein homogenes Temperaturfeld erforderlich, um einen repräsentativen Temperaturwert zu erhalten. Eine direkte Kammerbeheizung würde mit diesem Ziel in Konflikt stehen. Der adiabatische Erwärmungseffekt des RAIWaM ist für das Erreichen des beschriebenen Ziels ein wesentlicher Schritt.

Die mit der Ein- und Auslaufvorrichtung und ihren möglichen Ausgestaltungen erreichten bzw. erreichbaren Gewinne sind:
- die geräteinterne Kondensation kann vermieden oder zumindest verringert werden, ohne gesonderte Beheizung des Kernteils des Messsystems, also im Fall eines optischen Verfahrens der Absorptions- oder Streuungsmesskammer
- da der Lufteintritt von RAIWaM bei aerodynamisch korrekter Positionierung auf dem Flugzeugrumpf außerhalb der Reibungsschicht liegt,
   > können im Anströmbereich vorhandene Kabinenlecks keine Störungen erzeugen,
   > können im Anströmbereich Wasser- oder Eisanlagerungen an der Außenhaut des Flugzeuges ohne Einfluss (keine Memory-Effekte) bleiben,
- wegen des Staueffektes kann eine gegenüber der Außenluft deutlich erhöhte Wasserdampfdichte (um bis zu 50 %) im Endeffekt für eine Erniedrigung der unteren Ansprechschwelle des Messverfahrens sorgen.

Um die spezifizierten Eigenschaften (Lufteintrittspunkt außerhalb der Grenzschicht des Flugkörpers) zu haben, sollte der Lufteinlauf des RAIWaM in dem gleichen Abstand zur Flugzeugnase bzw. Rumpfnase untergebracht werden, der auch für die Temperatursensoren des Flugzeuges einzuhalten ist.

Die Erfindung betrifft eine Wasserdampfmesseinrichtung mit einer Ein- und Auslaufvorrichtung sowie einer Zuleitung, einem Messsystem mit einer Messkammer und einer Ableitung. Die Zuleitung ist mit dem Zuleitungsanschluss der Ein- und Auslaufvorrichtung und einem Eingang der Messkammer dicht verbunden. Die Ableitung ist mit einem Ausgang der Messkammer und dem Ableitungsanschluss der Ein- und Auslaufvorrichtung verbunden. Das Messsystem ist ausgebildet den Wasserdampfgehalt von Luft in der Messkammer zu bestimmen.

In einer bevorzugten Ausgestaltung der Wasserdampfmesseinrichtung ist die Messkammer eine Absorptionsmesskammer, die eine Bestimmung der Luftfeuchtigkeit mittels eines Absorptionsspektrogramms erlaubt.

Die Erfindung schließt die Erkenntnis ein, dass bekannte Wasserdampfmesseinrichtungen folgende Nachteile haben:
- Die in den Lufteinlauf einströmende Luft ist zuvor mit der stromaufwärts gelegenen Rumpfoberfläche in Kontakt. Abhängig von deren Wasser- oder Eisbenetzung und von der Temperatur können nicht reproduzierbare Trägheits-Effekte entstehen (auch Memory-Effekt genannt).
- Die Messluft kann wegen verschiedentlich auftretender kleiner Lecks im stromaufwärts gelegenen Teil der Druckkabine durch die wasserdampfangereicherte Innenluft der Kabine kontaminiert sein. Die Lecks können im Lauf der Alterung des Flugzeuges an Türen, Fenstern, Klappen, Steckverbindern, Fahrwerksschacht und allen Übergängen von Bauteilen des Rumpfes entstehen, beispielsweise durch Ermüdungserscheinungen an den Stoßnähten der Aluminium-bleche. Diese Lecks sind für den Flugbetrieb bedeutungslos, aber für die Wasserdampfmessung fatal. Der Effekt nimmt mit der Höhe zu, also mit zunehmender Druckdifferenz zwischen Kabine und Umgebung. Der Effekt ist vornehmlich flugzeugtypen- und - altersabhängig. Es können aber auch individuelle Unterschiede typengleicher Flugzeuge auftreten. Eine Kalibrierbarkeit dieser immer möglichen Fehlereffekte ist prinzipiell nicht gegeben.
- Der früheren Ein- und Auslaufvorrichtung, dem sogenannten "Air Sampler" (Teil des Systems WVSS-II von SpectraSensors Inc., USA) zugrundeliegendes Konstruktionsziel, nämlich der Erhalt des Flugzeugumgebungsdruckes (statischer Druck), hat sich als Nachteil erwiesen. Bei einer relativen Feuchte der Umgebungsluft von nahe 100 % kann im inneren Teil des Messluftweges (Schläuche, Übergangsstücke und Absorptionskammer) eine den Messprozess entscheidend störende Kondensation auftreten. Hierfür gibt es zwei Gründe:
   - Der Air Sampler kann an einer Stelle des Flugzeuges untergebracht sein, die einen umströmungsbedingten Unterdruck hat. Allein schon die damit unmittelbar verbundene adiabatische Abkühlung erreicht bei höheren Feuchtegraden schnell den Taupunkt.
   - Die thermische Trägheit der Innenwände der Eingangsluftführung und der Absorptionskammer sorgt bei Sinkflug, also dem Übergang von kälteren zu wärmeren Bedingungen, für die Unterschreitung des Taupunktes.

Die beiden letztgenannten Effekte sorgen oftmals für eine unerwünschte Kondensatbildung innerhalb der Messluftleitungen und vor allem innerhalb der Absorptionsmesskammer.

Es ist vorteilhaft, wenn das TAT-Gehäuse von RAIWaM beheizbar ist (ca. 300 W), um auf diese Weise die Gefahr der flugzeuggefährdenden Eisbildung an der Sonde zu unterbinden.

RAIWaM weist gemäß einer bevorzugten Ausführungsvariante ein TAT-Gehäuse auf, dessen Temperaturmesselement durch einen speziell angefertigten Einsatz ersetzt wird. Die aerodynamischen und thermodynamischen Bedingungen sind bei Stickney et al. (1994) beschrieben. Der Einsatz weist eine Stauhülse als ersten Zuleitungsabschnitt auf, die zum Einsetzen in den Schaft der Ein- und Auslaufvorrichtung ausgebildet ist und die so bemessen ist, dass eine Eintrittsöffnung der Stauhülse sich nahe der Öffnung zwischen Kopfteil und Schaft der Ein- und Auslaufvorrichtung befindet. Die Stauhülse ist über eine Einlaufleitung als zweitem Zuleitungsabschnitt mit einem Zuleitungsanschluss für die Zuleitung verbunden.

Der Einsatz weist ein die Einlaufleitung umgebendes Auslaufmantelrohr auf, das mit einem Ableitungsanschluss für die Ableitung verbunden ist. Der Einsatz weist des Weiteren Mittel zum lösbaren Verbinden des Einsatzes mit dem Schaft der Ein- und Auslaufvorrichtung auf. Das Auslaufmantelrohr kann weiterhin Austrittsöffnungen oder -schlitze aufweisen, die am oder nahe dem Übergang zwischen erstem Zuleitungsabschnitt und zweitem Zuleitungsabschnitt angeordnet sind und die ausgebildet sind, ein Fluid, beispielsweise die Messluft aus dem Auslaufmantelrohr, abzuführen. In einer bevorzugten Ausgestaltung des Einsatzes hat der erste Zuleitungsabschnitt einen größeren Querschnitt als die Summe der Querschnitte des zweiten Zuleitungsabschnitts und des den zweiten Zuleitungsabschnitt umgebenden Auslaufmantelrohrs. Im eingesetzten Zustand des Einsatzes in den Schaft der Ein- und Auslaufvorrichtung wird so ein Raum um das Auslaufmantelrohr erzeugt, der eine Abfuhr der Luft aus den Austrittsschlitzen begünstigt.

Die Erfindung soll nun in Bezug auf ein Ausführungsbeispiel anhand der Figuren näher erläutert werden. Von den Figuren ist
- Fig. 1:: eine schematische Ansicht einer Wasserdampfmesseinrichtung mit einer Ein- und Auslaufvorrichtung für Luft mit einem Einsatz zum Anschluss an eine Wasserdampfmesssystem

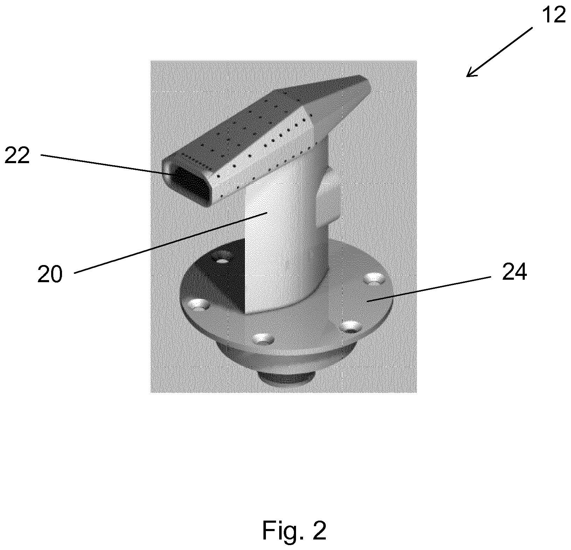

- Fig. 2:: eine perspektivische Außenansicht der Ein- und Auslaufvorrichtung
- Fig. 3a:: eine geschnittene Darstellung des Prinzipschemas der Ein- und Auslaufvorrichtung zur Erläuterung der Funktion des RAIWaM
- Fig. 3b: eine perspektivische Teilansicht eines Einsatzes und
- Fig. 4:: eine teilweise geschnittene, perspektivische Ansicht des Einsatzes in der Ein- und Auslaufvorrichtung als RAIWaM zum Anschluss der Ein- und Auslaufvorrichtung an ein im Flugzeuginneren angeordnetes Messsystem.

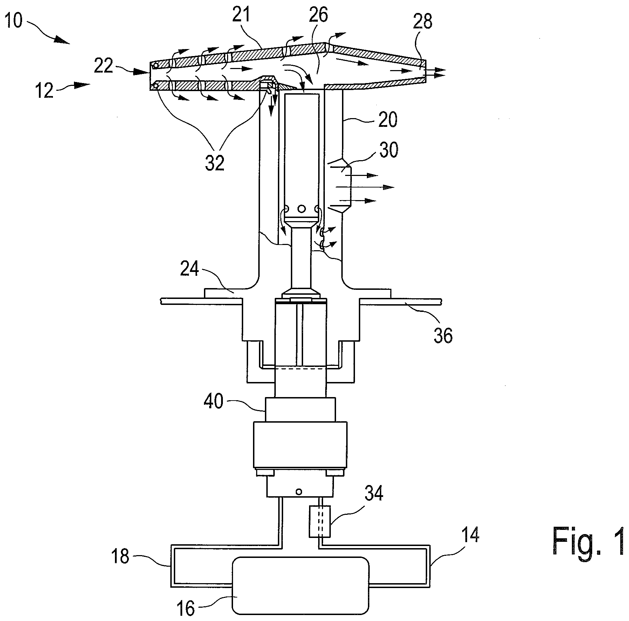

Fig. 1 zeigt eine Ansicht einer Wasserdampfmesseinrichtung 10 mit einer als RAIWaM dienenden Ein- und Auslaufvorrichtung 12 mit einem als Ausleger dienenden Schaft 20. In die Ein- und Auslaufvorrichtung 12 ist ein Einsatz 40 eingesetzt, mittels dessen die Ein- und Auslaufvorrichtung 12 über eine Zuleitung 14 und eine Ableitung 18 mit einer Messkammer 16 eines Messsystems verbunden ist. Der Einsatz 40 ist entnehmbar.

Die Wasserdampfmesseinrichtung 10 weist somit eine Messsonde 12 als RAIWaM in Form eines TAT-Gehäuses auf. Außerdem weist die Wasserdampfmesseinrichtung 10 eine erste Luftführung als Zuleitung 14, eine Messkammer 16 mit dem eigentlichen Wasserdampfmesssystem und eine zweite Luftführung als Ableitung 18 auf, die im Betrieb nacheinander von Messluft durchströmt werden. Die Zuleitung 14 erstreckt sich von dem TAT-Gehäuse 12 (Messsonde 12) zu einem Messkammereingang der Messkammer 16. Die Ableitung 18 erstreckt sich von einem Messkammerausgang der Messkammer 16 zurück zum TAT-Gehäuse 12.

Das TAT-Gehäuse 12 weist einen Schaft 20 als Ausleger auf, an dessen einen Ende ein aerodynamisch geformtes Kopfteil 21 mit einem Lufteintritt oder Lufteinlauf 22 vorgesehen ist und dessen anderes Ende ein Befestigungsende in Form eines Flansches 24 zur Befestigung an einem Luftfahrzeug ist.

Der Schaft 20 ist so bemessen, dass sich der Lufteinlauf 22 als Lufteintritt im Bereich der ersten wenigen Meter hinter der Flugzeugnase im Flugbetrieb außerhalb einer fluiddynamischen Grenzschicht um das im Flugzustand befindliche Luftfahrzeug ist, an dem die Ein- und Auslaufvorrichtung 12 befestigt ist.

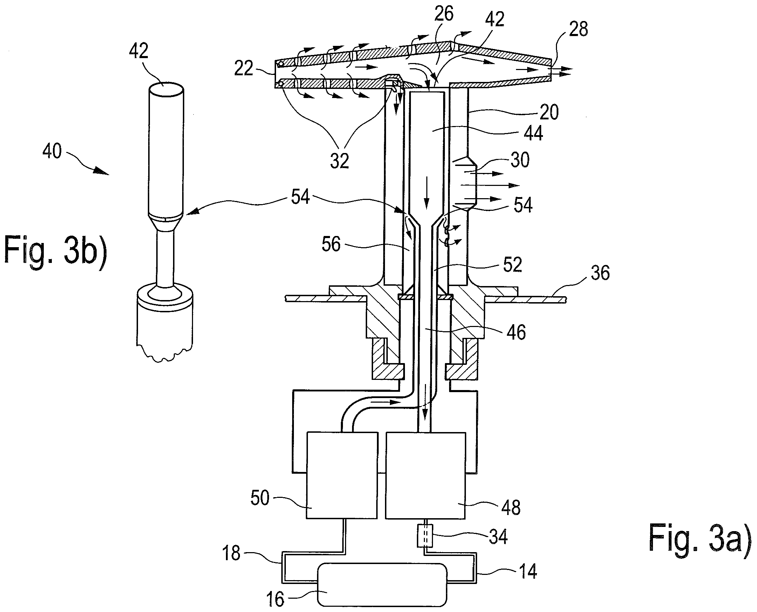

Fig. 3 illustriert den inneren Aufbau und die Funktion der gesamten Messeinrichtung inklusive RAIWaM. Der Kopfteil 21 schließt einen beidseitig offenen Strömungskanals 26 ein, dessen vorderes offenes Ende der Lufteinlauf 22 ist. Das hintere offene Ende des Strömungskanals 26 bildet einen Luftauslauf 28. Zwischen Lufteinlauf 22 und Luftauslauf 28 erweitert sich der Innenquerschnitt des Strömungskanals 26 zunächst und nimmt dann zum Luftauslauf 28 hin wieder ab. Der Luftauslauf 28 hat einen geringeren Querschnitt als der Lufteinlauf 22.

Die Zuleitung 14 geht dort von dem Strömungskanal 26 ab, wo dieser einen vergrößerten Innenquerschnitt aufweist. Die Ableitung 18 ist mit einem Luftauslass 30 fluid-verbunden, der an einer Hinterkante des Schafts 20 angeordnet ist

Der Strömungskanal 26 ist bezüglich des Schaftes 20 bzw. bezüglich dessen Flansch 24 so ausgerichtet, dass er im Betrieb etwa parallel zur Anströmrichtung der Umgebungsluft verläuft. Im Betrieb auf den Lufteinlauf 22 auftreffende Umgebungsluft staut sich am Lufteinlauf 22 und erwärmt sich durch diesen Staueffekt adiabatisch. Entsprechend ist die Messluft gegenüber der Umgebungsluft erwärmt. Die erwärmte Messluft strömt aus dem Strömungskanal 26 in die Zuleitung 14 und durch diese hindurch in das Messsystem mit der Messkammer 16. Dort findet die Wasserdampfmessung mittels Absorptionsspektrometrie statt. Anschließend tritt die Messluft aus der Messkammer 16 und deren Messkammerausgang heraus in die zweite Luftführung 18 und wird von dieser wieder zurück zum Ableitungsanschluss 50 geführt.

Somit wird die Luft innerhalb des Kopfteils in einem rechten Winkel zu der Stauhülse, der eigentlichen Einlassöffnung für die Temperaturmesssonde oder ggf. eine Weiterführung umgelenkt. Stromaufwärts vor diesem Umlenkpunkt ist der Kopfteil mit Löchern versehen, die durch die Sogwirkung der äußeren Umströmung die Reibungsschicht der Innenströmung absaugen und damit verkleinern. Damit wird erreicht, dass der umgelenkte Strömungsteil stromaufwärts weitestgehend keinen Kontakt mit der Gehäusewand erhält. Somit kann bei der ursprünglichen Verwendung als Temperaturmessvorrichtung der ungestörte adiabatische Staueffekt am Eintritt der Stauhülse entstehen. Dessen Erwärmungseffekt auf den in der Hülse befindlichen Sensor wird in einem einfachen Rechenverfahren kompensiert. Der Staueffekt wird durch enge Austrittsöffnungen am strömungsmäßigen Ende der Hülse erreicht, wo an der Hülsenaußenseite aerodynamisch bedingt ein relativer Unterdruck herrscht. Die Luftgeschwindigkeit ganz außerhalb wird von bis zu 300 m/s auf wenige m/s reduziert. Damit wird der nahezu vollständige Gesamtdruck als die Summe aus dem statischen (Umgebungs-) Druck und dem Auftreffdruck erreicht.

Zur Vermeidung von Eisbildung an der als Messsonde dienenden Ein- und Auslaufvorrichtung 12 sind die der Strömung zugewandten Stirnflächen der Eintrittsöffnungen mit einer elektrischen Sondenheizung 32 vorgesehen. Für eine gegebenenfalls nötige weitere Erwärmung der Messluft ist die erste Zuleitung 14 mit einer Heizung 34 versehen.

Der Schaft 20 bewirkt einen Abstand des Lufteinlaufs 22 von einer von der Flugzeugaußenhaut 36 gebildeten Flugzeugoberfläche, der so bemessen ist, dass sich der Lufteinlauf 22 außerhalb einer fluiddynamischen Grenzschicht um die Flugzeugaußenhaut 36 befindet und somit frei mit einer Geschwindigkeit angeströmt wird, die der Geschwindigkeit des Flugzeugs relativ zur Luft (Airspeed) entspricht. Der Abstand beträgt vorzugsweise zwischen 50mm und 150mm, beispielsweise zwischen 80mm und 100mm.

Anstelle einer sonst vorgesehenen Temperatursonde ist ein Einsatz 40 vorgesehen, der in das TAT-Gehäuse 12 eingesetzt ist und sowohl einen Teil der Zuleitung 14 als auch einen Teil der Ableitung 18 bildet und somit der Zu- und Abfuhr von Messluft zu dem Messsystem mit der Messkammer 16 dient. Fig. 3 zeigt den Einsatz 40 sowohl in einer schematischen Darstellung in der Querschnittsansicht des RAIWaM (Fig. 3a) als auch in einer perspektivischen Teilansicht (Fig. 3b).

Der Einsatz 40 ist so gestaltet, dass eine Eintrittsöffnung 42 des Einsatzes 40 unmittelbar an den Strömungskanal 26 angrenzt. An der Eintrittsöffnung 42 des Einsatzes 40 liegt der nahezu volle Auftreffdruck an. Die Eintrittsöffnung 42 ist gleichzeitig der Eingang zur Zuleitung 14. Ein in der Figur oberer Teil des Einsatzes 40 bildet somit einen ersten Zuleitungsabschnitt 44 in Form einer Stauhülse, an den sich in gerader Linie ein zweiter Zuleitungsabschnitt 46 als Einlaufleitung des Einsatzes 40 anschließt, die gegenüber der als erstem Zuleitungsabschnitt dienenden Stauhülse 44 einen verringerten Durchmesser aufweist und zu einem Zuleitungsanschluss 48 führt, an dem die weitere Zuleitung 14 angeschlossen ist, die schließlich zur Messkammer 16 führt.

Der Einsatz 40 bildet außerdem einen Teil der Ableitung 18. Zum Anschluss an die übrige Ableitung 18 ist ein Ableitungsanschluss 50 vorgesehen, der zu einem Ableitungsabschnitt 52 führt, der als Mantelrohr koaxial um den zweiten Zuleitungsabschnitt 46 herum angeordnet ist, und der in einen Austrittsschlitz 54 mündet, der sich dort befindet, wo der erste Zuleitungsabschnitt 44 mit größerem Durchmesser, also die Stauhülse, in den zweiten Zuleitungsabschnitt 46 (d.h. die Zuleitung) mit geringerem Durchmesser übergeht. Aus dem Austrittsschlitz 54 tritt abfließende Messluft in einen inneren Hohlraum 56 des Schafts 20 ein, der wiederum mit dem Luftauslass 30 am Schaft 20 fluidverbunden ist. Der innere Hohlraum 56 ist außerdem mit dem Strömungskanal 26 fluidverbunden und wird von in den Lufteinlauf 22 eintretender Luft durchströmt. Diese strömt unter anderem außen an dem ersten Zuleitungsabschnitt 44 mit vergrößertem Durchmesser vorbei und wird dort aufgrund einer Verengung infolge eines relativ geringen Abstandes zwischen einer Außenwand des ersten Zuleitungsabschnittes 44 und einer Innenwand des inneren Hohlraumes 56 beschleunigt, sodass sich ein gegenüber dem im Ableitungsabschnitt 52 herrschenden statischen Druck niedrigerer statischer Druck ergibt.

Der Einsatz 40 ist so gestaltet, dass dessen Eintritts- oder Stauhülse 44 zu der eines in TAT-Gehäusen verwendeten Temperaturmesseinsatzes geometrisch identisch ist. Die eingetretene Luft mündet in eine symmetrieachsenzentrale Einlaufleitung, die direkt zum Anschlussstück der Messluftzuleitung des eigentlichen Messsystems führt.

Die zurückfließende Messluft wird von dem Anschlussstück des Messsystemauslaufes über das Mantelrohr 52 um die Einlaufleitung zu dem Austrittsschlitz 54 geführt, der an dem Einsatz 40 genau an der Stelle ist, an der sich an dem geometrisch und aerodynamisch identischen Temperaturmesseinsatz des TAT-Gehäuses die Austrittsöffnungen befinden. Die aus diesem Schlitz austretende Luft geht über den inneren Hohlraum 56 zur rückwärtigen Austrittsöffnung, die den Luftauslass 30 bildet. Das Druckgefälle zwischen der Eintrittsöffnung 42 am Stirnende der Stauhülse 44 und dem Austrittsschlitz 54 sorgt für den Fluss der Messluft. Letztendlich ergibt sich eine im Labor nachgeprüfte Fließgeschwindigkeit zwischen 3 und 5 Litern pro Minute. Das ist für übliche Messsysteme mehr als ausreichend. Ein gesonderter Pumpenbetrieb ist nicht erforderlich.

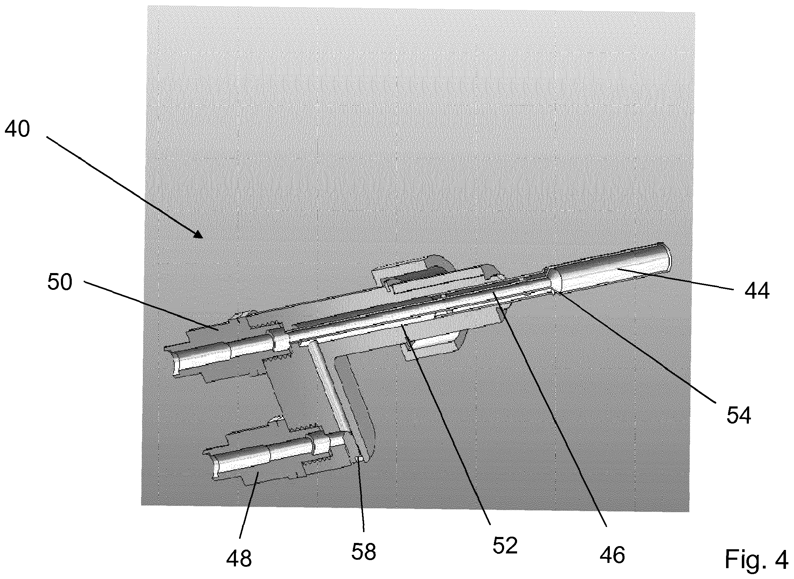

Die Menge Luft und damit auch der Druck im Luftführungssystem ab dem Eintritt sind über eine Stellschraube 58 einstellbar (siehe Schnittbild in Fig. 4). Die Stellschraube bewirkt eine justierbare Engstelle Diese Engstelle sorgt dafür, dass der Auftreffdruck im gesamten Messsystem gehalten wird. Die Durchströmungsmenge kann den Anforderungen des Messprozesses angepasst werden.

Fig. 4 zeigt eine teilweise geschnittene, perspektivische Ansicht des Einsatzes 40. Der gesamte Einsatz 40 ist in das TAT-Gehäuse 12 des RAIWaM einsetzbar und wieder entfernbar.

### Bezugszeichenliste

- 10: Wasserdampfmesseinrichtung
- 12: Ein- und Auslaufvorrichtung, Messsonde/TAT-Gehäuse,
- 14: Zuleitung
- 16: Messkammer
- 18: Ableitung
- 20: Schaft/Ausleger
- 21: Kopfteil
- 22: Lufteinlauf/Lufteintritt
- 24: Befestigungsende/ Befestigungsabschnitt /Flansch
- 26: Strömungskanal
- 28: Luftauslauf
- 30: Luftauslass
- 32: Sondenheizung
- 34: Heizung
- 36: Flugzeugaußenhaut
- 40: Einsatz
- 42: Eintrittsöffnung
- 44: Stauhülse, erster Zuleitungsabschnitt
- 46: Einlaufleitung, zweiter Zuleitungsabschnitt
- 48: Zuleitungsanschluss
- 50: Ableitungsanschluss
- 52: Ableitungsabschnitt/ Mantelrohr
- 54: Austrittsschlitz
- 56: Hohlraum
- 58: Stellschraube

## Patentansprüche

1. Wasserdampfmesseinrichtung (10) mit einer flugzeugmontierbaren Ein- und Auslaufvorrichtung (12), sowie einer Zuleitung (14), einem Messsystem mit einer Messkammer (16) und einer Ableitung (18),
wobei die flugzeugmontierbare Ein- und Auslaufvorrichtung (12) ein Kopfteil (21) mit einem Lufteinlauf (22), einen Schaft (20) mit einem Luftauslass (30) sowie einen Befestigungsabschnitt (24) für die Befestigung der Ein- und Auslaufvorrichtung (12) an einem Flugzeug aufweist, wobei der Lufteinlauf (22) einen solchen Abstand von dem Befestigungsabschnitt (24) hat, dass der Lufteinlauf (22) sich außerhalb einer Reibungsschicht um eine Oberfläche eines Flugzeuges befindet, wenn die Ein- und Auslaufvorrichtung (12) an einem fliegenden Flugzeug montiert ist,
wobei die Ein- und Auslaufvorrichtung (12) einen lösbaren Einsatz (40) aufweist, der zum Einsetzen in den Schaft (20) der Ein- und Auslaufvorrichtung (12) ausgebildet ist, der eine Eintrittsöffnung (42) und einen ersten Zuleitungsabschnitt (44) in Form einer Stauhülse, an den sich in gerader Linie ein zweiter Zuleitungsabschnitt (46) als Einlaufleitung des Einsatzes (40) anschließt, die gegenüber der als erstem Zuleitungsabschnitt dienenden Stauhülse (44) einen verringerten Durchmesser aufweist, aufweist und der so bemessen ist, dass die Eintrittsöffnung (42) der Stauhülse (44) sich nahe einer Öffnung zwischen dem Kopfteil (21) und dem Schaft (20) der Ein- und Auslaufvorrichtung (12) befindet, wobei die Stauhülse (44) über die Einlaufleitung (46) mit einem Zuleitungsanschluss (48) für die Zuleitung (14) verbunden ist,
wobei der Einsatz (40) ein die Einlaufleitung (46) umgebendes Auslaufmantelrohr (52) aufweist, das mit einem Ableitungsanschluss (50) für die Ableitung verbunden ist,
wobei der Einsatz (40) Mittel zum lösbaren Verbinden des Einsatzes (40) mit dem Schaft (20) der Ein- und Auslaufvorrichtung (12) aufweist,
wobei der Lufteinlauf (22) über die Stauhülse und die Einlaufleitung (46) mit den Zuleitungsanschluss (48) für die Zuleitung (14) verbunden ist, um in den Lufteinlauf (22) eintretende Luft zu der Messkammer (16) eines Messsystems zu führen, das sich im Betrieb im Inneren eines Flugzeuges befindet,
wobei der Luftauslass (30) über das Auslaufmantelrohr (52) mit dem Ableitungsanschluss (50) für die Ableitung (18) verbunden ist, um aus der Messkammer (16) austretende Luft zum Luftauslass (30) der Ein- und Auslaufvorrichtung (12) zu führen,
wobei die Zuleitung (14) mit dem Zuleitungsanschluss (48) der Ein- und Auslaufvorrichtung (12) und einem Eingang der Messkammer (16) dicht verbunden ist und die Ableitung (18) mit einem Ausgang der Messkammer (16) und dem Ableitungsanschluss (50) der Ein- und Auslaufvorrichtung (12) verbunden ist und wobei das Messsystem ausgebildet ist, den Wasserdampfgehalt von Luft in der Messkammer (16) zu bestimmen, und
wobei die Wasserdampfmesseinrichtung (10) sowohl eine an einer Stirnfläche der Ein- und Auslaufvorrichtung (12) und/oder am Übergang oder nahe dem Übergang zwischen Lufteinlauf (22) und Stauhülse (44) angeordnete Sondenheizung (32) als auch eine an der Zuleitung (14) zur Messkammer (16) angeordnete Heizung (34) aufweist.

2. Wasserdampfmesseinrichtung (10) gemäß Anspruch 1, wobei für die flugzeugmontierbare Ein- und Auslaufvorrichtung (12) der Abstand zwischen Befestigungsabschnitt (24) und Lufteinlauf (22) zwischen 50 mm und 150 mm, insbesondere zwischen 80 mm und 100 mm beträgt.

3. Wasserdampfmesseinrichtung (10) gemäß Anspruch 1 oder 2, wobei die flugzeugmontierbare Ein- und Auslaufvorrichtung (12) einen Flansch (24) aufweist, wobei sich der Schaft (20) zwischen Flansch (24) und Kopfteil (21) erstreckt und die Einlaufleitung (46) umschließt und wobei das Kopfteil (21) an einer Stirnseite den Lufteinlauf (22) aufweist und wobei der Flansch (24) den Befestigungsabschnitt (24) zum Befestigen der Ein- und Auslaufvorrichtung (12) an einem Flugzeug bildet.

4. Wasserdampfmesseinrichtung (10) gemäß Anspruch 3, wobei das Kopfteil (21) einen beidseitig offenen Strömungskanal (26) einschließt, dessen vorderes, offenes Ende der Lufteinlauf (22) ist und der im Betrieb von Luft durchströmt wird und so angeordnet ist, dass er im Betrieb annähernd parallel zur anliegenden Strömung verläuft.

5. Wasserdampfmesseinrichtung (10) gemäß Anspruch 4, wobei sich der Strömungskanal (26) stromabwärts des Lufteinlaufes (22) zunächst im Innenquerschnitt erweitert und anschließend zu seinem offenen hinteren, einen Luftauslauf (28) bildenden Ende wieder verjüngt, wobei die Zuleitung (14) von einem im Innenquerschnitt erweiterten Abschnitt des Strömungskanals (26) abgeht.

6. Wasserdampfmesseinrichtung (10) gemäß Anspruch 4 oder 5, wobei das hintere offene Ende des Strömungskanals (26) einen kleineren Querschnitt hat, als der Lufteinlauf (22).

7. Wasserdampfmesseinrichtung (10) gemäß Anspruch 1, wobei die Messkammer (16) eine Absorptionsmesskammer ist, die eine Bestimmung der Luftfeuchtigkeit mittels eines Absorptionsspektrogramms erlaubt.

8. Wasserdampfmesseinrichtung (10) gemäß wenigstens einem der Ansprüche 1 bis 7, wobei das Auslaufmantelrohr (52) Austrittsschlitze (54) aufweist, die am oder nahe dem Übergang zwischen erstem Zuleitungsabschnitt (44) und zweitem Zuleitungsabschnitt (46) angeordnet sind und die ausgebildet sind, ein Fluid aus dem Auslaufmantelrohr (52) abzuführen.

9. Wasserdampfmesseinrichtung (10) gemäß wenigstens einem der Ansprüche 1 bis 8, wobei der erste Zuleitungsabschnitt (44) einen größeren Querschnitt aufweist als die Summe der Querschnitte des zweiten Zuleitungsabschnitts (46) und des den zweiten Zuleitungsabschnitt (46) umgebenden Auslaufmantelrohrs (52).

## Claims

1. A water vapor measuring device (10) comprising an aircraft-mountable inflow and outflow apparatus (12), as well as a supply line (14), a measuring system with a measuring chamber (16) and a discharge line (18),
wherein the aircraft-mountable inflow and outflow apparatus (12) has a head part (21) with an air inlet (22), a shaft (20) with an air outlet (30) and a mounting section (24) for mounting the inflow and outflow apparatus (12) to an aircraft, wherein the air inlet (22) is arranged at such a distance from the mounting section (24) that the air inlet (22) is located outside a friction layer around a surface of an aircraft, when the inflow and outflow apparatus (12) is mounted to a flying aircraft,
wherein the inflow and outflow apparatus (12) has a detachable insert (40) configured for insertion into the shaft (20) of the inflow and outflow apparatus (12); said detachable insert (40) comprising an entry opening (42) and a first supply line portion (44) in the form of an accumulating sleeve that is, in a straight line, adjoined by a second supply line portion (46) that serves as the entry line of the insert (40) and that, compared to the accumulating sleeve (44) serving as the first supply line portion, has a reduced diameter, and said detachable insert (40) being dimensioned such that the entry opening (42) of the accumulating sleeve (44) is located in the vicinity of an opening between the head part (21) and the shaft (20) of the inflow and outflow apparatus (12), wherein the accumulating sleeve (44) is connected to a supply line connection (48) for supply (14) via the entry line (46).
wherein the insert (40) has an outlet jacket pipe (52) connected to a discharge connection (50) for discharging,
wherein the insert (40) comprises means for connecting the insert (40) in a detachable manner to the shaft (20) of the inflow and outflow apparatus,
wherein the air inlet (22) is connected via the accumulating sleeve and the entry line (46) to the supply line connection (48) for the supply line (14), in order to guide air entering the air inlet (22) to the measuring chamber (16) of a measuring system which, during operation, is located inside an aircraft,
wherein the air outlet (30) is connected via the outlet jacket pipe (52) to the discharge connection (50) for the discharge line (18), in order to guide air exiting the measuring chamber (16) to the air outlet (30) of the inflow and outflow apparatus (12),
wherein the supply line (14) is tightly connected to a supply line connection (48) of the inflow and outflow apparatus (12) and to an entry of the measuring chamber (16) and wherein the discharge line (18) is connected to an exit of the measuring chamber (16) and the discharge line connection (50) of the inflow and outflow apparatus, and wherein the measuring system is configured to determine the water vapor content of the air in the measuring chamber (16), and
wherein the water vapor measuring device (10) has both a probe heater (32) arranged at an end face of the inflow and outflow apparatus (12) and/or at the transition or in the vicinity of the transition between the air inlet (22) and the accumulating sleeve (44) and a heater (34) arranged at the supply line (14) to the measuring chamber (16).

2. A water vapor measuring device (10) according to claim 1, wherein the distance between the mounting section (24) and the air inlet (22) for the inflow and outflow apparatus (12) is between 50 mm and 150 mm, in particular between 80 mm and 100 mm.

3. A water vapor measuring device (10) according to claim 1 or 2, wherein the aircraft-mountable inflow and outflow apparatus (12) has a flange (24), wherein the shaft (20) extends between the flange (24) and the head part (21) and surrounds the entry line (46), and wherein, on an end face, the head part (21) has the air inlet (22), and wherein the flange (24) forms the mounting section (24) for mounting the inflow and outflow apparatus (12) to an aircraft.

4. A water vapor measuring device (10) according to claim 3, wherein the head part (21) encloses a flow channel (26) open on both sides, the open front end of which is the air inlet (22) and through which air flows during operation, and which is arranged such that, during operation, it extends approximately parallel to the respectively present flow.

5. A water vapor measuring device (10) according to claim 4, wherein, downstream of the air inlet (22), the inner cross-section of the flow channel initially widens and subsequently tapers again towards the air inlet's (22) open rear end that forms an air outlet (28), wherein the supply line (14) extends from a section of the flow channel (26) where the inner cross-section is widened.

6. A water vapor measuring device (10) according to claim 4 or 5, wherein the open rear end of the flow channel (26) has a smaller cross-section than the air inlet (22).

7. A water vapor measuring device (10) according to claim 1, wherein the measuring chamber (16) is an absorption measuring chamber that makes it possible to determine the air humidity by means of an absorption spectrogram.

8. A water vapor measuring device (10) according to at least one of claims 1 to 7, wherein the outlet jacket pipe (52) has outlet slots (54) that are arranged at or near the transition between the first supply line portion (44) and the second supply line portion (46) and that are configured to discharge a fluid from the outlet jacket pipe (52).

9. A water vapor measuring device (10) according to at least one of claims 1 to 8, wherein the first supply line portion (44) has a larger cross-section than the sum of the cross-sections of the second supply line portion (46) and the outlet jacket pipe (52) surrounding the second supply line portion (46).

## Revendications

1. Dispositif (10) de mesure de vapeur d'eau comportant un dispositif (12) à écoulement d'entrée et de sortie pouvant être monté sur un avion, ainsi qu'un conduit (14) d'alimentation, un système de mesure comportant une chambre (16) de mesure et un conduit (18) de décharge,
dans lequel le dispositif (12) à écoulement d'entrée et de sortie pouvant être monté sur un avion comporte une partie (21) de tête ayant une entrée (22) pour l'air, un arbre (20) comportant une sortie (30) pour l'air ainsi qu'une partie (24) de fixation pour la fixation du dispositif (12) à écoulement d'entrée et de sortie à un avion, l'entrée (22) pour l'air étant à une distance de la partie (24) de fixation telle que l'entrée (22) pour l'air se trouve à l'extérieur d'une couche de frottement au niveau d'une surface d'un avion, lorsque le dispositif (12) à écoulement d'entrée et de sortie est monté sur un avion en vol,
dans lequel le dispositif (12) à écoulement d'entrée et de sortie comporte un insert (40) amovible, qui est formé pour être inséré dans l'arbre (20) du dispositif (12) à écoulement d'entrée et de sortie, qui comporte une ouverture (42) d'entrée et une première partie (44) d'alimentation sous la forme d'un manchon d'accumulation, auquel se raccorde en ligne droite une deuxième partie (46) d'alimentation en tant que conduit d'entrée de l'insert (40), qui a un diamètre rétréci par rapport au manchon (44) d'accumulation servant en tant que première partie d'alimentation, et est dimensionné de sorte que l'ouverture (42) d'entrée du manchon (44) d'accumulation se trouve à proximité d'une ouverture entre la partie (21) de tête et l'arbre (20) du dispositif (12) à écoulement d'entrée et de sortie, le manchon (44) d'accumulation étant relié par le conduit (46) d'entrée à un raccord (48) de conduit d'alimentation pour le conduit (14) d'alimentation,
dans lequel l'insert (40) comporte un tube (52) formant enveloppe d'écoulement de sortie entourant le conduit (46) d'entrée, le tube étant relié à un raccord (50) de conduit de décharge pour le conduit de décharge,
dans lequel l'insert (40) comporte des moyens pour relier de manière amovible l'insert (40) à l'arbre (20) du dispositif (12) à écoulement d'entrée et de sortie,
dans lequel l'entrée (22) pour l'air est reliée par l'intermédiaire du manchon d'accumulation et du conduit (46) d'entrée au raccord (48) de conduit d'alimentation pour le conduit (14) d'alimentation, de manière à conduire de l'air entrant dans le conduit (22) d'entrée pour l'air à la chambre (16) de mesure d'un système de mesure, qui se trouve en fonctionnement à l'intérieur d'un avion,
dans lequel la sortie (30) pour l'air est reliée par l'intermédiaire du tube (52) formant enveloppe de sortie au raccord (50) de conduit de décharge pour le conduit (18) de décharge, afin de conduire de l'air sortant de la chambre (16) de mesure vers la sortie (30) pour l'air du dispositif (12) à écoulement d'entrée et de sortie,
dans lequel le conduit (14) d'alimentation est relié de manière étanche au raccord (48) de conduit d'alimentation du dispositif (12) à écoulement d'entrée et de sortie et à une entrée de la chambre (16) de mesure et le conduit (18) de décharge est relié à une sortie de la chambre (16) de mesure et au raccord (50) de conduit de décharge du dispositif (12) à écoulement d'entrée et de sortie et dans lequel le système de mesure est réalisé de manière à déterminer la teneur en vapeur d'eau de l'air dans la chambre (16) de mesure, et
dans lequel le dispositif (10) de mesure de vapeur d'eau comporte aussi bien un dispositif (32) de chauffage de sonde disposé sur une surface du dispositif (12) à écoulement d'entrée et de sortie et/ou à la transition ou au voisinage de la transition entre l'entrée (22) pour l'air et le manchon (44) d'accumulation, qu'également un dispositif (34) de chauffage disposé au conduit (14) d'alimentation vers la chambre (16) de mesure.

2. Dispositif (10) de mesure de vapeur d'eau suivant la revendication 1, dans lequel, pour le dispositif (12) à écoulement d'entrée et de sortie pouvant être monté sur un avion, la distance entre la partie (24) de fixation et l'entrée (22) pour l'air est comprise entre 50 mm et 150 mm, notamment entre 80 mm et 100 mm.

3. Dispositif (10) de mesure de vapeur d'eau suivant la revendication 1 ou 2, dans lequel le dispositif (12) à écoulement d'entrée et de sortie pouvant être monté sur un avion comporte une bride (24), dans lequel l'arbre (20) s'étend entre la bride (24) et la partie (21) de tête et enferme le conduit (46) d'entrée, et dans lequel la partie (21) de tête comporte d'un côté avant le conduit (22) d'entrée pour l'air et dans lequel la bride (24) forme la partie (24) de fixation pour la fixation du dispositif (12) à écoulement d'entrée et de sortie à un avion.

4. Dispositif (10) de mesure de vapeur d'eau suivant la revendication 3, dans lequel la partie (21) de tête inclut un canal (26) d'écoulement ouvert des deux côtés, dont l'extrémité ouverte avant forme l'entrée (22) pour l'air et qui en fonctionnement est traversé par de l'air et disposé de sorte qu'en fonctionnement il s'étend sensiblement parallèlement à l'écoulement portant dessus.

5. Dispositif (10) de mesure de vapeur d'eau suivant la revendication 4, dans lequel le canal (26) d'écoulement en aval de l'entrée (22) pour l'air s'élargit d'abord en section transversale intérieure puis se rétrécit de nouveau vers son extrémité arrière ouverte formant une sortie (28) pour l'air, dans lequel le conduit (14) d'alimentation part d'une partie plus élargie en section transversale intérieure du canal (26) d'écoulement.

6. Dispositif (10) de mesure de vapeur d'eau suivant la revendication 4 ou 5, dans lequel l'extrémité ouverte arrière du canal (26) d'écoulement a une section transversale plus petite que l'entrée (22) pour l'air.

7. Dispositif (10) de mesure de vapeur d'eau suivant la revendication 1, dans lequel la chambre (16) de mesure est une chambre de mesure d'absorption, qui permet une détermination de l'humidité au moyen d'un spectromètre à absorption.

8. Dispositif (10) de mesure de vapeur d'eau suivant au moins l'une des revendications 1 à 7, dans lequel le tube (52) formant enveloppe de sortie comporte des fentes (54) de sortie, qui sont disposées à la transition entre la première partie (44) d'alimentation et la deuxième partie (46) d'alimentation, ou à proximité de cette transition, et qui sont formées de manière à guider un fluide hors du tube (52) formant enveloppe de sortie.

9. Dispositif (10) de mesure de vapeur d'eau suivant au moins l'une des revendications 1 à 8, dans lequel la première partie (44) d'alimentation a une section transversale plus grande que la somme des sections transversales de la deuxième partie (46) d'alimentation et du tube (52) formant enveloppe de sortie qui entoure la deuxième partie (46) d'alimentation.
